**Europäisches Patentamt**

**European Patent Office**

**Office européen des brevets**

(11) Veröffentlichungsnummer: **0 302 131 B1**

(12) # EUROPÄISCHE PATENTSCHRIFT

(45) Veröffentlichungstag der Patentschrift:
01.08.90

(51) Int. Cl.⁵: **B02C 7/12, A47J 42/16**

(21) Anmeldenummer: **87111337.9**

(22) Anmeldetag: **05.08.87**

(54) Mühle.

(43) Veröffentlichungstag der Anmeldung:
08.02.89 Patentblatt 89/6

(45) Bekanntmachung des Hinweises auf die Patenterteilung:
01.08.90 Patentblatt 90/31

(84) Benannte Vertragsstaaten:
AT BE CH DE ES FR GB IT LI NL SE

(56) Entgegenhaltungen:
CH-A- 110 983
FR-A- 1 070 467
GB-A- 25 444
SE-A- 440 857
US-A- 2 284 789
US-A- 2 888 212

(73) Patentinhaber: **Arthur Eugster Elektro-Haushaltgeräte,
Hofstrasse 28a, CH-8590 Romanshorn(CH)**

(72) Erfinder: **Anliker, Werner, Pfadacher 1,
CH-8623 Wetzikon(CH)**

(74) Vertreter: **Patentanwälte Grünecker, Kinkeldey,
Stockmair & Partner, Maximilianstrasse 58,
D-8000 München 22(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine Mühle zum Zerkleinern von körnigem Gut, wie Getreide, Kaffee oder dergleichen, mit zwei gegeneinander verdrehbaren, an ihren Axialflächen zusammenwirkenden Zahnscheiben, einer Stator-Zahnscheibe und einer Rotor-Zahnscheibe, auf deren Axialflächen jeweils in etwa gleichen tangentialen Abständen miteinander wirkende, mit Radialschneiden versehene Schneidezähne angeordnet sind, wobei in radialer Richtung der Zahnscheiben jeweils abwechselnd mit den die Radialschneiden aufweisenden Schneidezähnen mit zu den Radialschneiden etwa rechtwinklig angeordneten Axialschneiden angeordnet sind.

Solche Mühlen sind aus der Praxis hinreichend bekannt. Sie finden zumeist Anwendung als elektrische Einzelmühle oder als Zusatzgerät für eine Universalküchenmaschine. Die dort verwendeten Mahlscheiben weisen sägezahnartige Schneidezähne mit im wesentlichen radial nach außen weisenden Schneiden auf. Genauer gesagt sind die Radialschneiden tangential zu einem gedachten, konzentrischen innenliegenden Kreis angeordnet, d.h. die Verlängerung der Schneiden läuft nicht genau durch die Drehachse der Zahnscheiben. Zum Außenumfang der Zahnscheiben hin steigt die Zahl der Schneidezähne an, die dann aber kleiner ausgebildet sind als die radial weiter innenliegenden Schneidezähne. Die beiden Zahnscheiben liegen so ineinander, daß sich, im Querschnitt gesehen, ein von radial innen nach radial außen konvergierender Spalt ergibt. Die Mahlwerke solcher Mühlen nennt man auch Flachscheibenmahlwerke.

Zwar läßt sich mit solchen Flachscheibenmahlwerken eine Zerkleinerung von körnigem Gut erreichen, jedoch neigt das Mahlgut stark zum Kollern. Das Mahlgut wird zwischen den Zahnscheiben zerrieben, wodurch enorme Wärme und viele, unerwünschte Staubanteile entwickelt werden. Die unterschiedlich zerkleinerten Kornanteile werden je nach Umfangsgeschwindigkeit und Zähnestellung durch den Spalt am Außenumfang zwischen beiden Zahnscheiben regelrecht hindurchgepreßt. Als Mahlergebnis erhält man unterschiedlich großes Schrot mit einem verhältnismäßig hohen Staub- und Faseranteil, wobei das Mahlgut verhältnismäßig stark erwärmt wird. Hierdurch werden die Aroma-, Bitter-, Geschmacks-, Duft- und Farbstoffe des Mahlgutes, insbesondere bei der Kaffee- und Getreidezerkleinerung ungünstig beeinflußt. Ungleich zerkleinerter Kaffee mit viel Staubanteil verstopft die Filter.

Eine Mühle der eingangs genannten Art zum Mahlen von Kaffe ist aus der CH-A 110 983 bekannt. Das dort gezeigte Mahlwerk weist einen äußeren Kranz mit Axialschneiden auf. Radial innenliegend von diesen Axialschneiden ist ein konisches Mahlwerk vorgesehen. Das Mahlgut gelangt zunächst durch das konische, in Treppenstufen ausgeführte Mahlwerk, wo es zerrieben wird. Erst am Ende des Mahlvorganges erfolgt ein Zerschneiden des Mahlgutes an dem äußeren Zahnkranz mit axialen Schneiden.

Es ist Aufgabe der vorliegenden Erfindung, die Mahlleistung einer Mühle der eingangs genannten Art bei Beibehaltung eines gleichmäßigen Mahlgutes zu erhöhen.

Diese Aufgabe wird erfindungsgemäß dadurch gelöst, daß die Stator-Zahnscheibe mehr oder weniger Schneidezähne mit Radialschneiden und mehr Schneidezähnen mit Axialschneiden aufweist als die Rotor-Zahnscheibe.

Durch diese Lösung wird die Mahlleistung der Mühle erhöht, da bei einer kleinen Zähnezahldifferenz nur sehr wenige Zahnlücken vollständig geschlossen sind, während alle anderen Zwischenräume zwischen den Zähnen mehr oder weniger geöffnet sind. Weiterhin ergibt sich hierdurch eine besonders gleichmäßige Arbeitsweise der Schrotmühle. Die Zähne von Statorscheibe und Rotorscheibe bewegen sich praktische ohne Abstand aneinander vorbei, wodurch das körnige Gut zunächst in einer horizontalen Ebene und unmittelbar daraufhin einer vertikalen Ebene zerschnitten wird. Ein Zerreiben bereits geschroteter Kornteile zwischen den Zahnscheiben ist damit praktisch ausgeschlossen. Die Zahnscheibenhohlräume zwischen der einen, als Rotor ausgebildeten Zahnscheibe und der anderen, als Stator ausgebildeten, Zahnscheibe weisen keine gezahnten Stellen auf. Die Folge der verminderten Kollerung und Reibung des körnigen Gutes ist unmittelbar eine geringere Wärmeaufnahme, was den Erhalt von Aromastoffen usw. begünstigt. Durch die ungleiche Anzahl an Zähnezahlen lassen sich diese Vorteile auch bei einer hohen Mahlleistung verwirklichen.

Gemäß einer bevorzugten Ausführungsform ist auf der Axialfläche der Stator-Zahnscheibe, ein radial innenliegender Ring mit Radialschneiden aufweisenden Schneidezähnen angeordnet, um welchen herum ein Außenring mit Axialschneiden aufweisenden Schneidezähnen angeordnet ist. Hierdurch wird das der Mühle zugeführte Mahlgut zunächst einer Zerkleinerung in einer horizontalen Schnittebene, nämlich durch die Radialschneiden, zugeführt, woran sich eine Zerkleinerung in einer vertikalen Schnittebene, nämlich durch die Axialschneiden anschließt.

Der von dem Mahlgut durch die Mühle zurückgelegte Weg läßt sich in vorteilhafter Weise dadurch verkürzten, daß der Innenring zum Außenring axial abgestuft ausgebildet ist. Das bedeutet, daß die in ihrer Horizionalebene bereits zerteilten Kornteile unmittelbar der vertikalen Schneideinrichtung zugeführt werden. Die Verweildauer des Mahlgutes in der Mühle verringert sich hierdurch, so daß das Mahlgut noch weniger Wärme aufnehmen kann.

Es ist vorteilhaft, wenn die Schneidezähne des Innenringes relativ zu denen des Außenringes größer ausgebildet sind. Dadurch wird dem Umstand Rechnung getragen, daß das Mahlgut, das den Axialschneiden zugeführt wird, bereits durch die Radialschneiden der Schneidezähne des Innenringes zerkleinert wurde.

Es läßt sich in günstiger Weise eine Förderwirkung der Stator-Zahnscheibe dadurch erreichen, daß die Radialschneiden der Schneidezähne der Stator-Zahnscheibe tangential zu einem gedachten, konzentrisch innerhalb des Innenringes liegenden Kreises ausgerichtet sind. Dadurch, daß die Zähne des Rotors das körnige Gut auf die schräg angestellten Radialschneiden der als Stator ausgebildeten Stator-Zahnscheibe schieben, wird das Mahlgut radial nach außen gefördert.

Gemäß einer bevorzugten Ausführungsform der Erfindung sind in dem Innenring mindestens eine sich am Umfang über die Ausdehnung mehrer Schneidezähne erstreckende Schneideplatte angeordnet, deren axiale Oberseite mit den Radialschneiden der Schneidezähne fluchtet. Hierdurch wirkt die Schneideplatte ebenfalls als Schneidezahn mit Radialschneide. Die Schneideplatten dienen zur Aufnahme der Befestigungsschrauben für die Stator-Zahnscheibe. Hierdurch ergibt sich, daß die Ausdehnung der Schneideplatten radial nach innen in der Regel größer ist, als die radiale Ausdehnung der mit den Radialschneiden versehenen Schneidezähne. Die Schneideplatte weist daher eine radial angeordnete Staufläche auf, die ein Durchrutschen des Mahlgutes verhindert.

Gemäß einer bevorzugten Ausführungsform weist die Rotorzahnscheibe, die beispielsweise als Rotor aussebildet sein kann, einen Außenring aus Schneidezähnen mit Axialschneiden auf. Diese Axialschneiden wirken mit den Axialschneiden der Schneidezähne der Stator-Zahnscheibe zusammen.

Die Anordnung der Axialschneiden beider Zahnscheiben ist vorzugsweise derart, daß die Axialschneiden der Rotor-Zahnscheibe am Außenumfang des Außenringes angeordnet sind und mit den am Innenumfang des Außenringes der Stator-Zahnscheibe angeordneten Axialschneiden zusammenwirken.

Da bei einer bevorzugten Weiterbildung der Erfindung der Zahnfuß der mit den Axialschneiden versehenen Schneidezähne der Rotor-Zahnscheibe radial nach innen angeschrägt ausgebildet sein kann, bewirken die Kanten zwei benachbarter Zahnfüße dieser Schneidezähne eine Zentrierung des noch unzerkleinerten Kornes beim Einführen in die Zwischenräume zwischen den Schneidezähnen des Innenringes der Stator-Zahnscheibe.

Eine bevorzugte Ausführungsform der Erfindung sieht vor, daß in dem Außenring der Rotor-Zahnscheibe mindestens eine, sich am Umfang über die Ausdehnung mehrerer Schneidezähne erstreckende Schneideplatte angebracht ist, deren axiale Oberseite im zusammengebauten Zustand im wesentlichen in einer Ebene mit der axialen Oberseite der Schneideplatte der Stator-Zahnscheibe liegt. Dadurch wirken die beiden Schneideplatten der Stator und der Rotor-Zahnscheibe zum einen als Zerkleinerungswerkzeug mit Radialschneide und zum anderen als Drehführung für die beiden Zahnscheiben. Die Schneideplatten der Rotor-Zahnscheibe liegen nämlich in der Stufe zwischen dem Außenring und dem Innenring der Stator-Zahnscheibe und überspinnen jeweils mehrere Schneidezähne mit radialer Schneide und mehrere Schneidezähne mit axialer Schneide. Die Stufe zwischen dem Außenring und dem Innenring der Stator-Zahnscheibe wirkt daher mit der axialen Oberseite und der tangentialen Außenseite der Schneideplatten der Rotor-Zahnscheibe als Drehführung.

Eine besonders gute Führung beider Zahnscheiben gegeneinander wird dadurch erreicht, daß jede Zahnscheibe drei, oder mehrere über den Umfang gleichmäßig verteilte Schneideplatten aufweist, in denen jeweils eine Befestigungsbohrung für die jeweilige Zahnscheibe angeordnet ist.

Hierbei genügt bereits eine Differenz in der Zähnezahl von einem Zahn. Die Mahlleistung der Mühle läßt sich erhöhen, da bei einer Zähnezahldifferenz von einem Zahn stets nur eine Zahnlücke vollständig geschlossen ist. Alle anderen Zwischenräume zwischen den Zähnen sind mehr oder weniger geöffnet.

Eine bevorzugte Ausführungsform sieht vor, daß die StatorZahnscheibe mehr Schneidezähne mit Axialschneide aufweist, als die Rotor-Zahnscheibe.

Die Erfindung bezieht sich auch auf ein Verfahren zur Zerkleinerung von körnigem Gut, insbesondere Kaffee oder Getreide, durch Zerschneiden des Gutes in einer horizontalen oder vertikalen Schnittebene, wobei sich das Verfahren dadurch auszeichnet, daß das Gut infolge abwechselnd nacheinander mindestens in einer horizontalen und vertikalen Schnittebene zerschnitten wird. Dieses Verfahren läßt sich mit der zuvor beschriebenen Mühle durchführen und bewirkt im wesentlichen die ebenfalls zuvor beschriebenen Vorteile.

Im folgenden wird ein Ausführungsbeispiel der Erfindung anhand einer Zeichnung näher erläutert. Es zeigen:

Fig. 1 In einer Seitenansicht das zusammengebaute Mahlwerk einer erfindungsgemäßen Mühle,

Fig. 2 eine perspektivische Ansicht einer Zahnscheibe des Mahlwerks aus Fig. 1,

Fig. 3 eine perspektivische Ansicht der anderen Zahnscheibe des Mahlwerks aus Fig. 1,

Fig. 4 die Zahnscheibe aus Fig. 2 in einer Druntersicht, gesehen in Richtung der Pfeile IV-IV in Fig. 1, und

Fig. 5 die Zahnscheibe aus Fig. 3 in einer Draufsicht, gesehen in Richtung der Pfeile V-V in Fig. 1, und

Fig. 6 das Mahlwerk aus Fig. 1 in einer Schnittansicht entlang der Linie VI-VI.

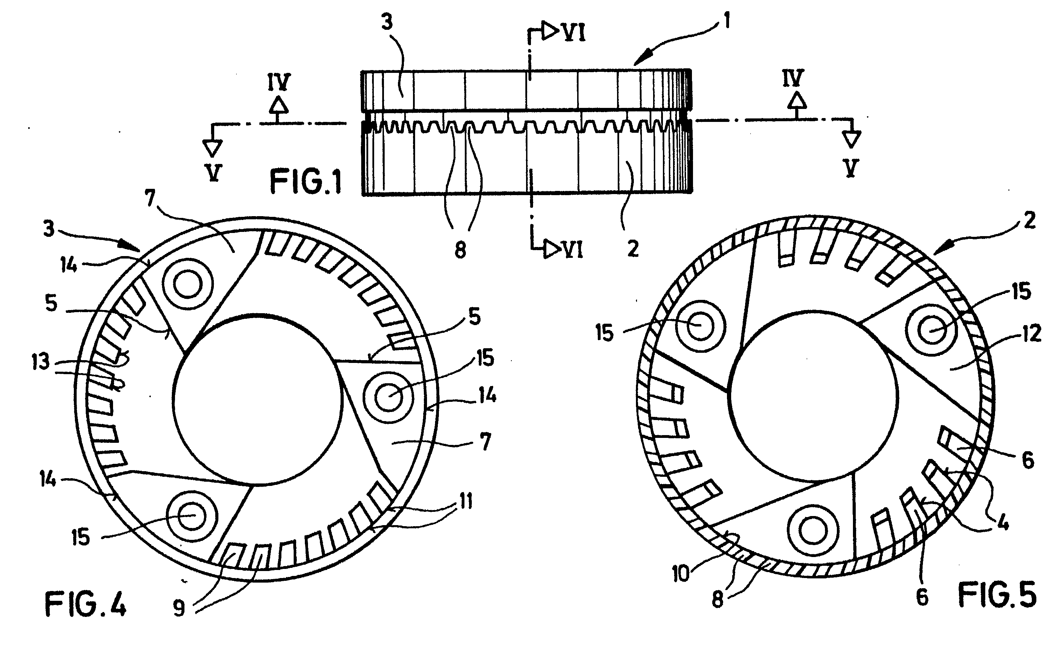

In Fig. 1 ist in einer Seitenansicht das Mahlwerk 1 einer erfindungsgemäßen Mühle zum Zerkleinern von körnigem Gut, wie Getreide, Kaffee od. dgl. dargestellt. Das Mahlwerk 1 umfaßt zwei, gegeneinander verdrehbare, an ihren einander zugewandten Axialflächen zusammenwirkende Zahnscheiben 2 und 3.

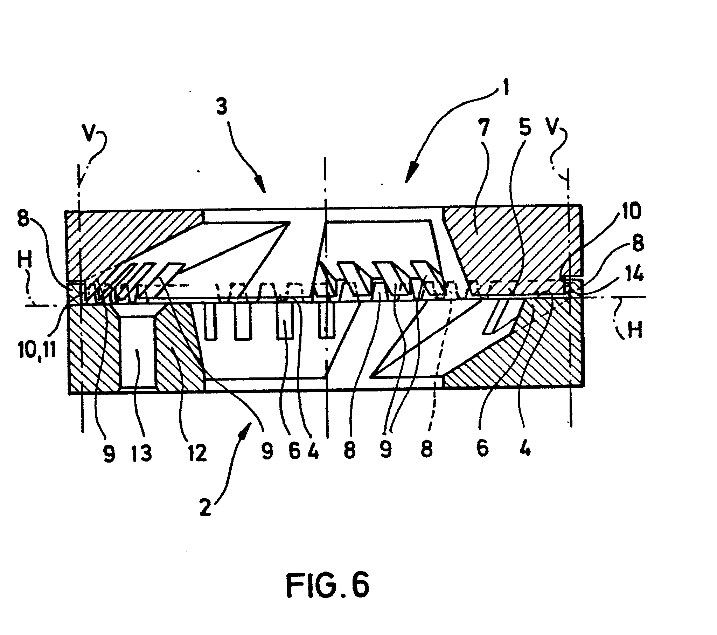

Besonders gut aus den Fig. 4 und 5 ersichtlich ist, die in einer Draufsicht die im zusammengebauten Zustand einander zugewandten Axialflächen der Zahnscheiben 2 und 3 zeigen, weisen die Zahnscheiben 2 und 3 jeweils über den Umfang etwa gleichmäßig verteilte und miteinander wirkende, mit Radialschneiden 4 und 5 versehene Schneidezähne 6 und 7 auf.

Aus den Fig. 4 und 5 ist weiterhin gut erkennbar, daß in radialer Richtung der Zahnscheiben 2 und 3 jeweils abwechselnd mit den die Radialschneiden 4 und 5 aufweisenden Schneidezähnen 6 und 7 in konzentrischer Ringanordnung Schneidezähne 8 und 9 mit zu den Radialschneiden 4 und 5 etwa rechtwinklig angeordneten Axialschneiden 10 und 11 angeordnet sind.

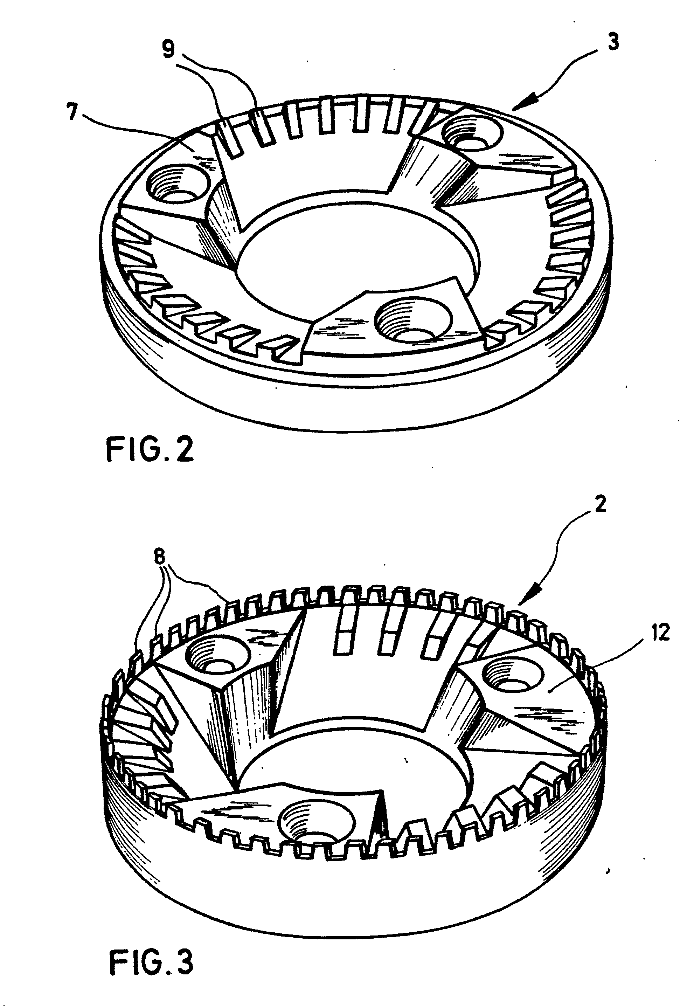

Die in Fig. 3 und 5 gezeigte Zahnscheibe 2 wird im folgenden erste Zahnscheibe genannt. Diese Zahnscheibe ist in dem Mahlwerk 1 als Stator ausgebildet und liegt, wie in Fig. 1 ersichtlich ist, unter der in den Fig. 2 und 4 dargestellten und als Rotor ausgebildeten zweiten Zahnscheibe 3.

Die Stator-Zahnscheibe weist, wie aus den Fig. 3 und 5 hervorgeht, in einer radial innenliegenden Ringanordnung die die Radialschneide 4 aufweisenden Schneidezähne 6 auf. Um die Ringanordnung der Schneidezähne 6 herum sind in Form eines Außenringes die Schneidezähne 8 mit den Axialschneiden 10 angeordnet.

Wie insbesondere gut aus Fig. 3 ersichtlich ist, ist der aus den Schneidezähnen 6 gebildete Innenring zu dem aus den Schneidezähnen 8 gebildeten Außenring axial abgestuft ausgebildet. Es ist auch erkennbar, daß die Schneidezähne 6 des Innenrings relativ zu den Schneidezähnen 8 des Außenrings größer ausgebildet sind. Die Verlängerung der Radialschneiden 4 der Schneidezähne 6 der Stator-Zahnscheibe 2 sind, wie anhand der gestrichelten Linien in Fig. 5 ersichtlich ist, tangential zu einem gedachten, konzentrisch innerhalb des Innenrings liegenden Kreisels ausgerichtet.

Die Stator-Zahnscheibe 2 weist drei oder mehrere, gleichmäßig über den Umfang verteilt und sich über die Ausdehnung mehrerer Schneidezähne 6 des Innenringes erstreckende Schneideplatten 12 auf. Die axiale Oberseite der Schneidplatten 12 liegt in einer Ebene mit den Radialschneiden 4 der Schneidzähne 6. Es wird darauf hingewiesen, daß bei diesem Ausführungsbeispiel die axialen Oberflächen der Schneidezähne 6 insgesamt in der gleichen Ebene liegen und nicht zur Radialschneide 4 angestellt sind.

Wendet man sich den Fig. 2 und 3 zu, so erkennt man, daß bei der Rotor-Zahnscheibe 3 die die Axialschneiden 11 aufweisenden Schneidezähne 9 ebenfalls in Form eines Außenringes angeordnet sind. Genau genommen sind die Axialschneiden 11 der Rotor-Zahnscheibe 3 am Außenumfang des Außenringes angeordnet und wirken daher mit den an dem Innenumfang des Außenringes der Stator-Zahnscheibe 2 angeordneten Axialschneiden 10 zusammen.

Der Zahnfuß 13 der mit den Axialschneiden 10 versehenen Schneidezähne 9 ist radial nach innen angeschrägt ausgebildet. Das heißt, der Zahnfuß 13 erstreckt sich in Richtung des trichterförmig ausgebildeten Grundkörpers der Rotor-Zahnscheibe 3 (vgl. Fig. 2). Die Stator-Zahnscheibe 2 ist, das sei der Vollständigkeit halber erwähnt, an ihrem Grundkörper ebenfalls trichterförmig ausgebildet (vgl. Fig. 3).

Die die Radialschneiden 5 aufweisenden Schneidezähne 7 der Rotor-Zahnscheibe 3 werden, wie aus den Fig. 2 und 4 ersichtlich ist, durch insgesamt drei oder mehrere, sich über den Umfang der Zahnscheibe 3 gleichmäßig verteilenden und über die Ausdehnung mehrerer Schneidezähne 9 erstreckende Schneideplatten gebildet. Die Schneideplatten 7 sind von der Form her im wesentlichen genauso ausgebildet, wie die Schneideplatten 12 der Stator-Zahnscheibe 2. Die axiale Oberseite der Schneideplatten 7 fluchtet mit der axialen Oberseite der Schneidezähne 9 und liegt im zusammengebauten Zustand des Mahlwerkes 1 im wesentlichen in der gleichen Ebene, in der auch die axiale Oberseite der Schneideplatten 12 angeordnet ist. Dadurch, daß sich die Schneideplatten 7 über die Umfangsausdehnung mehrerer Schneidezäh- ne 9 erstreckt, weist die Schneideplatte 7 an ihrer Außenseite einen Führungsbund 14 auf. Dieser Führungsbund 14 greift im zusammengebauten Zustand des Mahlwerkes 1 in die zwischen den Schneidezähnen 6 des Innenrings und den Schneidezähnen 8 des Außenringes gebildete Stufe ein und bewirkt eine Drehführung der beiden Zahnscheiben 2 und 3 gegeneinander.

Wie aus den Fig. 4 und 5 besonders gut erkennbar ist, weisen die Schneideplatten 7 und 12 Befestigungsbohrungen für die jeweilige Zahnscheibe 2 bzw. 3 auf. Die Bohrungen sind mit Senklöchern ausgestattet, so daß die Oberseite der in die Befestigungsbohrungen 15 eingesetzten Schrauben nicht über die axiale Oberseite der Schneideplatten 7 bzw. 12 überstehen.

Es ist erkennbar, daß die Stator-Zahnscheibe 2 mehr Schneidezähne 8 mit Axialschneiden 10 aufweist, als die Rotor-Zahnscheibe 3 Schneidezähne 9 mit Axialschneiden 10 aufweist. Hierdurch ergibt sich, daß unabhängig davon, wie die beiden Zahnscheiben 2 und 3 gegeneinander verdreht sind, stets die meisten Lücken zwischen den Schneidezähnen 8 und 9 geöffnet sind, so daß hier das Mahlgut eintreten kann.

Es ist im übrigen auch zu erkennen, daß die Stator-Zahnscheibe 2 mehr Schneidezähne 6 mit Radialschneiden 4 aufweist, als die Rotor-Zahnscheibe 3 Schneidezähne 7 mit Radialschneiden 5 aufweist.

In Fig. 6 ist das Mahlwerk 1 aus Fig. 1 auch in einer Schnittansicht dargestellt. Aus dieser Schnittansicht geht besonders deutlich hervor, daß die jeweils zusammenwirkenden Schneiden, nämlich die Radialschneiden 4 und 5 der Schneidezähne 6 und 7 sowie die Axialschneiden 10 und 11 der Schneidezähne 8 und 9 ganz dicht aneinanderliegen, so daß das Mahlgut nicht gequetscht werden kann, sondern an der Nahtstelle zwischen den jeweiligen Schneiden sauber durchtrennt wird.

Im folgenden wird die Wirkungsweise der Erfindung anhand des oben beschriebenen Ausführungsbeispieles näher erläutert.

Zum Zerkleinern von körnigem Gut, wie hier z.B. Getreide, wird dieses von oben zwischen die beiden Zahnscheiben 2 und 3 eingefüllt. Die in den Fig. 1 und 6 dargestellte untere Zahnscheibe 3 wirkt als Rotor, während die obere Zahnscheibe 2 als Stator wirkt. Das heißt, die untere Zahnscheibe 2 wird in der Draufsicht gegenim Uhrzeigersinn gedreht. Dadurch werden die zwischen den Zahnscheiben 2 und 3 befindlichen Körner durch die Zähne 9 der untere Zahnscheibe 3 in die Zahnlücken der mit den Axialschneiden 10 versehenen Schneidezähne 8 der oberen Zahnscheibe 2 gefördert (vgl. Fig. 4). Die Zahnscheibe 3 fährt dann mit der Radialschneide 5 der drei Schneideplatten 7 gegen die zwischen den Zähnen 6 befindlichen Körner und schert diese in einer horizontalen Schnittebene ab.

Die so in einer horizontalen Schnittebene H zerkleinerten Körner werden durch den Mahlgutstrom weiter radial nach außen geführt und gelangen in den Bereich zwischen den Zähnen 9 der unteren Zahnscheibe 3 und der Schneidezähne 8 der oberen Zahnscheibe 2. Dort wird das vorzerkleinerte Mahlgut durch die sich gegeneinander bewegenden Axialschneiden 10 und 11 in einer vertikalen Schnittebene V zerkleinert. Von dort gelangt das fertig zerkleinerte Mahlgut durch die Lücken zwischen den Zähnen 8 nach außen und kann nach unten herabfallen, wo es in einem nicht gezeigten Auffangbehälter aufgefangen werden kann.

Aus der obigen Beschreibung wird deutlich, daß das in dem Mahlwerk 1 befindliche Mahlgut lediglich durch Scher- bzw. Schnittvorgänge zerkleinert wird, nicht hingegen durch Quetschvorgänge. Das bewirkt, daß das fertiggemahlene Mahlgut nur einen geringen Staubanteil aufweist. Durch die Aufeinanderfolge horizontaler und vertikaler Schnitte werden die Kornteile kubisch bzw. kugelartig geschnitten, wobei die entstehenden Schrotteile im wesentlichen die gleiche Größe aufweisen.

Obwohl das Mahlwerk der erfindungsgemäßen Mühle anhand des Mahlens von Getreide beschrieben wurde, eignet sich dieses Mahlwerk auch für eine Kaffeemühle oder zum Zerkleinern anderer körniger Materialien. Hierzu sind evtl. die Größenabmessungen der einzelnen Zähne zu ändern, ohne daß jedoch die Aufeinanderfolge vertikaler und horizontaler Schnittebene geändert wird.

Obwohl bei dem Ausführungsbeispiel die zuerst wirkenden Schneiden in einer horizontalen Schnittebene angeordnet sind, während die darauffolgenden Schneiden in einer vertikalen Schnittebene angeordnet sind, ist es auch möglich, daß die Schneiden zunächst in einer vertikalen Schnittebene angeordnet sind, auf die dann die horizontale Schnittebene folgt. Es können auch mehrere hintereinander angeordnete Schnittebenen jeweils alternierend angeordnet sein.

Es ist auch denkbar, die Stator-Zahnscheibe als sich gegensinnig zur Rotor-Zahnscheibe drehende Zahnscheibe auszubilden.

Im übrigen ist es auch möglich, daß die Rotor-Zahnscheibe festgehalten wird und sich nur die Stator-Zahnscheibe dreht.

**Patentansprüche**

1. Mühle zum Zerkleinern von körnigem Gut, wie Getreide, Kaffee oder dergleichen, mit zwei gegeneinander verdrehbaren, an ihren Axialflächen zusammenwirkenden Zahnscheiben (2, 3), einer Stator-Zahnscheibe (2) und einer Rotor-Zahnscheibe (3), auf deren Axialflächen jeweils in etwa gleichen tangentialen Abständen miteinander wirkende, mit Radialschneiden (4, 5) versehene Schneidezähne (6, 7) angeordnet sind, wobei in radialer Richtung der Zahnscheiben (2, 3) jeweils abwechselnd mit den die Radialschneiden (4, 5) aufweisenden Schneidezähne (6, 7) in konzentrischer Ringanordnung Schneidezähne (8, 9) mit zu den Radialschneiden (4, 5) etwa rechtwinklig angeordneten Axialschneiden (10, 11) angeordnet sind, dadurch gekennzeichnet, daß die Stator-Zahnscheibe (2) mehr oder weniger Schneidezähne (6) mit Radialschneiden (4) und mehr Schneidezähne (8) mit Axialschneiden (10) aufweist als die Rotor-Zahnscheibe (3).

2. Mühle nach Anspruch 1, dadurch gekennzeichnet, daß auf der Axialfläche einer ersten Stator-Zahnscheibe (2) ein radial innenliegender Ring mit Radialschneiden (4) aufweisenden Schneidezähnen (6) angeordnet ist, um welchen herum ein Außenring mit Axialschneiden (10) aufweisenden Schneidezähnen (8) angeordnet ist.

3. Mühle nach Anspruch 1 oder 2, dadurch gekennzeichnet, daß der Innenring zum Außenring axial abgestuft ausgebildet ist.

4. Mühle nach einem der Ansprüche 1 bis 3, dadurch gekennzeichnet, daß die Schneidezähne (6) des Innenrings relativ zu denen des Außenrings (8) größer ausgebildet sind.

5. Mühle nach einem der Ansprüche 1 bis 4, dadurch gekennzeichnet, daß die Verlängerung der Radialschneiden (4) der Schneidezähne (6) der ersten Stator-Zahnscheibe (2) tangential zu einem gedachten, konzentrisch innerhalb des Innenrings liegenden Kreises ausgerichtet ist.

6. Mühle nach einem der Ansprüche 1 bis 5, dadurch gekennzeichnet, daß in dem Innenring mindestens eine, sich am Umfang über die Ausdehnung mehrerer Schneidezähne erstreckende Schneideplatte (12) angeordnet ist, deren axiale Oberseite mit den Radialschneiden (4) der Schneidezähne (6) fluchtet.

7. Mühle nach einem der Ansprüche 1 bis 6, dadurch gekennzeichnet, daß die Rotor-Zahnscheibe (3) einen Außenring aus Schneidezähnen (9) mit Axialschneiden (11) aufweist.

8. Mühle nach einem der Ansprüche 1 bis 7, dadurch gekennzeichnet, daß die Axialschneiden (11) der Rotor-Zahnscheibe (3) am Außenumfang des Außenringes angeordnet sind und mit den am Innenumfang des Außenrings der ersten Zahnscheibe (2) angeordneten Axialschneiden (10) zusammenwirken.

9. Mühle nach einem der Ansprüche 1 bis 8, dadurch gekennzeichnet, daß der Zahnfuß (13) der mit den Axialschneiden (11) versehenen Schneidezähne (9) der Rotor-Zahnscheibe (3) radial nach innen abgeschrägt ausgebildet ist.

10. Mühle nach einem der Ansprüche 1 bis 9, dadurch gekennzeichnet, daß in dem Außenring der Rotor-Zahnscheibe (3) mindestens eine, sich am Umfang über die Ausdehnung mehrerer Schneidezähne (9) erstreckende Schneideplatte (7) angebracht ist, deren axiale Oberseite im zusammengebauten Zustand im wesentlichen in einer Ebene mit der axialen Oberseite der Schneideplatte (12) der Stator-Zahnscheibe (2) liegt.

11. Mühle nach einem der Ansprüche 1 bis 10, dadurch gekennzeichnet, daß jede Zahnscheibe (2, 3) drei, oder mehrere über den Umfang gleichmäßig verteilte, Schneideplatten (7, 12) aufweist, in denen jeweils eine Befestigungsbohrung (15) für die jeweilige Zahnscheibe (2 bzw. 3) angeordnet ist.

12. Verfahren zur Zerkleinerung von körnigem Gut, insbesondere Kaffee oder Getreide, durch Zerschneiden des Gutes in einer horizontalen oder vertikalen Schnittebene, dadurch gekennzeichnet, daß das Gut in Folge abwechselnd nacheinander mindestens in einer horizontalen (H) und einer vertikalen Schnittebene (V) zerschnitten wird.

**Claims**

1. A mill for comminuting granular material, such as cereals, coffee or the like, comprising two toothed discs (2, 3) which are rotatable relatively to one another and which co-operate at their axial surfaces, one such disc (2) being a stator disc and the other (3) a rotor disc, the axial surfaces of the said discs each having cutting teeth (6, 7) which are provided with radial cutting edges (4, 5) and which co-operate with one another at substantially identical tangential distances, cutting teeth (8, 9) which have axial cutting edges (10, 11) disposed substantially at right angles to the radial cutting edges (4, 5) being disposed alternately, as considered in the radial direction of the toothed discs (2, 3), with the cutting teeth (6, 7) having the radial cutting edges (4, 5), the cutting teeth (8, 9) being in a concentric annular arrangement, characterised in that the toothed stator disc (2) has more or less cutting teeth (6) with radial cutting edges (4) and more cutting teeth (8) with axial cutting edges (10) than the toothed rotor disc (3).

2. A mill according to claim 1, characterised in that a radial inner ring with cutting teeth (6) having radial cutting edges (4) is disposed on the axial surface of a first toothed stator disc (2), an outer ring with cutting teeth (8) which have axial cutting edges (10) being disposed around the said ring.

3. A mill according to claim 1 or 2, characterised in that the inner ring is axially stepped in relation to the outer ring.

4. A mill according to any one of claims 1 to 3, characterised in that the cutting teeth (6) of the inner ring are larger than those of the outer ring (8).

5. A mill according to any one of claims 1 to 4, characterised in that the extension of the radial cutting edges (4) of the cutting teeth (6) of the first toothed stator disc (2) is aligned tangentially to an imaginary circle situated concentrically within the inner ring.

6. A mill according to any one of claims 1 to 5, characterised in that at least one cutting plate (12) extending peripherally over the length of a plurality of cutting teeth is disposed in the inner ring and its axial upper side is in alignment with the radial cutting edges (4) of the cutting teeth (6).

7. A mill according to any one of claims 1 to 6, characterised in that the toothed rotor disc (3) comprises an outer ring made up of cutting teeth (9) with axial cutting edges (11).

8. A mill according to any one of claims 1 to 7, characterised in that the axial cutting edges (11) of the toothed rotor disc (3) are disposed at the outer periphery of the outer ring and co-operate with the axial cutting edges (10) disposed at the inner periphery of the outer ring of the first toothed disc (2).

9. A mill according to any one of claims 1 to 8, characterised in that the root (13) of the cutting teeth (9) having the axial cutting edges (11) on the toothed rotor disc (3) is chamfered radially inwards.

10. A mill according to any one of claims 1 to 9, characterised in that at least one cutting plate (7) extending peripherally over the length of a plurality of cutting teeth (9) is disposed in the outer ring of the toothed rotor disc (3) and its axial upper side in the assembled state is substantially co-planar with the axial upper side of the cutting plate (12) of the toothed stator disc (2).

11. A mill according to any one of claims 1 to 10, characterised in that each toothed disc (2, 3) comprises three or a plurality of cutting plates (7, 12) distributed uniformly over the periphery and each having a fixing bore (15) for the associated toothed disc (2 or 3).

12. A method of comminuting granular material, more particularly coffee or cereals, by cutting the material in a horizontal or vertical cutting plane, characterised in that the material is then cut alternately in succession at least in a horizontal cutting plane (H) and a vertical cutting plane (V).

**Revendications**

1. Moulin destiné au broyage de produits en grains, tels que des céréales, du café, ou autres, comportant deux disques dentés (2, 3) accouplés par leurs faces axiales et pouvant tourner l' un contre l'autre, soit un disque denté-stator (2) et un disque denté-rotor (3), sur les faces axiales desquels sont respectivement disposées à des distances tangentielles sensiblement égales des dents de coupe (6, 7) pourvues de tranchants radiaux (4, 5), sur lesquels sont disposés dans la direction radiale des disques dentés (2, 3) et selon une disposition annulaire concentrique des dents de coupe (8, 9) pourvues de tranchants axiaux (10, 11) formant sensiblement un angle droit avec les tranchants radiaux (4, 5), qui sont respectivement alternées avec les dents de coupe (6, 7) pourvues de tranchants radiaux (4, 5) caractérisé en ce que le disque denté-stator (2) présente plus ou moins de dents de coupe (6) avec des tranchants radiaux (4) et davantage de dents de coupe (8) avec des tranchants axiaux (10) que le disque denté-rotor (3).

2. Moulin selon la revendication 1, caractérisé en ce qu'est disposé sur la face axiale d'un premier disque denté-stator (2) un anneau situé radialement à l'intérieur, pourvu de dents de coupe (6) présentant des tranchants radiaux (4), autour duquel est disposé un anneau extérieur pourvu de dents de coupe (8) présentant des tranchants axiaux (10).

3. Moulin selon la revendication 1 ou 2, caractérisé en ce que l' anneau intérieur présente un étagement axial par rapport à l'anneau extérieur.

4. Moulin selon l'une des revendications 1 à 3, caractérisé en ce que les dents de coupe (6) de l' anneau intérieur sont constituées plus grandes que celles de l'anneau extérieur (8).

5. Moulin selon l'une des revendications 1 à 4, caractérisé en ce que le prolongement des tranchants radiaux (4) des dents de coupe (6) du premier disque denté-stator (2), est aligné tangentiellement à un cercle conçu à l'intérieur de l' anneau intérieur et concentrique à celui-ci.

6. Moulin selon l'une des revendications 1 à 5, caractérisé en ce qu'est disposée sur l'anneau intérieur au moins une plaque de coupe (12) s'étendant sur le pourtour et couvrant la largeur de plusieurs dents de coupe, dont la face supérieure axiale affleure les tranchants radiaux (4) des dents de coupe (6).

7. Moulin selon l'une des revendications 1 à 6 caractérisé en ce que le disque denté-rotor (3) présente un anneau extérieur constitué par des dents de coupe (9) pourvues de tranchants axiaux (11).

8. Moulin selon l'une des revendications 1 à 7, caractérisé en ce que les tranchants axiaux (11) du disque denté-rotor (3) sont disposés sur le pourtour extérieur de l'anneau extérieur et sont associés aux tranchants axiaux (10) disposés sur le pourtour intérieur de l'anneau extérieur du premier disque denté (2).

9. Moulin selon l'une des revendications 1 à 8, caractérisé en ce que le pied de dent (13) des dents de coupe (9) pourvues de tranchants axiaux (11) de la roue dentée-rotor (3) est constitué avec un biseau dirigé radialement vers l'intérieur.

10. Moulin selon l'une des revendications 1 à 9, caractérisé en ce qu'est disposée sur l'anneau extérieur du disque denté-rotor (3) au moins une plaque de coupe (7) s'étendant sur son pourtour et couvrant la largeur de plusieurs dents de coupe (9), dont la face supérieure axiale se trouve, à l'état assemblé, essentiellement dans le même plan que la face supérieure axiale de la plaque de coupe (12) du disque denté-stator (2).

11. Moulin selon l'une des revendications 1 à 10, caractérisé en ce que chaque roue dentée (2, 3) présente trois plaques de coupe (7, 12) ou davantage régulièrement réparties sur le pourtour et dans chacune desquelles est aménagé un alésage de fixation (15) du disque considéré (2 ou 3).

12. Procédé pour le broyage de produits en grains, notamment du café ou des céréales, par sectionnement du produit dans un plan de coupe horizontal ou vertical, caractérisé en ce que le produit est tour à tour sectionné successivement dans un plan de coupe horizontal (H) et dans un plan de coupe vertical (V).

FIG.1

FIG.4

FIG.5

FIG.2

FIG.3

FIG.6